# EUROPEAN PATENT APPLICATION

(11) **EP 3 738 994 A1**
(43) Date of publication of application: **18.11.2020**
(21) Application number: 19174480.4
(22) Date of filing: 14.05.2019
(51) Int. Cl.: C08J 5/18, G11B 5/73

(54) **FLEXIBLE SUBSTRATE, METHOD FOR THE MANUFACTURE THEREOF, AND FLEXIBLE ELECTRONIC ASSEMBLIES COMPRISING THE FLEXIBLE SUSBTRATE**

(71) Applicant: SABIC Global Technologies B.V., 4612 PX Bergen op Zoom (NL)
(72) Inventor: Tayeb, Mohammed A., 23955-6900 Thuwal (SA); Raboui, Hasan A., 23955-6900 Thuwal (SA); Owens III, Donald E., 23955-6900 Thuwal (SA); Kalyanaraman, Viswanathan, Mt. Vernon, IN 47620 (US); Nayak, Pradipta K., 23955-6900 Thuwal (SA); Almaghathuwi, Ramzi S., 23955-6900 Thuwal (SA)
(74) Representative: Balder IP Law, S.L.

(57) **Abstract**

A flexible substrate for an electronic assembly includes a film including a poly(etherimide) having particular repeating units is described herein. The flexible substrates can be particularly useful in the production of flexible electronic assemblies and articles including the flexible substrate or flexible electronic assembly.

## Description

### BACKGROUND

There is increasing interest in providing new optical displays, including liquid crystal displays, organic light emitting diode displays, electrophoretic displays, and the like that are flexible. The successful manufacture of such transparent, flexible displays remains challenging. For example, glass substrates currently used in such displays are generally thick, heavy, rigid, or vulnerable to breakage, thus significantly reducing the ability to design new displays to meet consumer needs. To address the technical limitations of glass substrates, polymer substrates are attractive, as they can typically be produced using roll-to-roll manufacturing techniques, which can increase production efficiency and decrease manufacturing costs. For example, polyethylene naphthalate (PEN) films are highly transparent and have a low coefficient of thermal expansion (CTE) (<20 ppm/°C). However, PEN films can only be processed below 180 °C and the film exhibits high birefringence (>0.001). Poly(cycloolefin) (COP) films have excellent transparency, high thermal stability (Tg 300 °C) and almost zero birefringence, but the CTE of these films is too large (>70 ppm/°C) for display applications.

There remains a need for a flexible substrate that exhibits the desired balance of properties, including thermal and optical properties. Accordingly, it would be desirable to provide a transparent, flexible polymer substrate suitable for use in various electronics application. In particular, it would be especially advantageous to provide a polymer substrate which provides the needed clarity, mechanical stability, thermal stability, barrier, solvent resistance, low coefficient of thermal expansion, and smooth surface.

### SUMMARY

A flexible substrate for an electronic assembly comprises: a film comprising a poly(etherimide) comprising repeating units of formula (I) and formula (II) 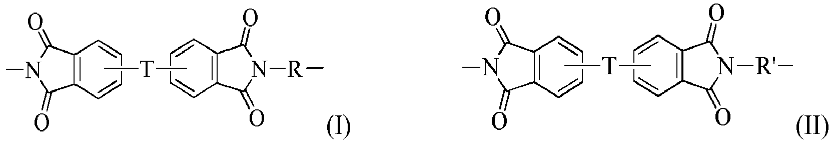 wherein T is -O- or a group of the formula -O-Z-O- and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, R is a divalent group of the formula 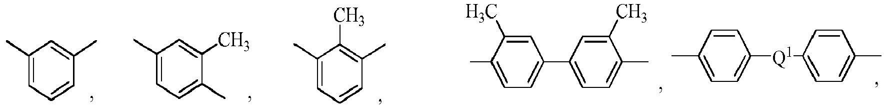 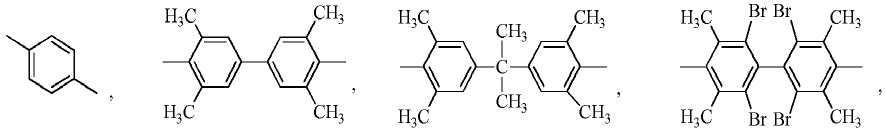 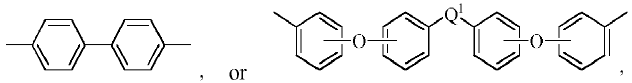 wherein Q¹ is -O-, -S-, -SO₂-, -SO-, -P(R^{a})(=O)- wherein R^{a} is a C₁₋₈ alkyl or C₆₋₁₂ aryl, -C_{y}H_{2y}- wherein y is an integer from 1 to 5 or a halogenated derivative thereof, or -(C₆H₁₀)_{z}- wherein z is an integer from 1 to 4; R' is a divalent group comprising a photoactive ketone group, and R' is present in an amount of at least 0.1 mole percent, or at least 0.25 mole percent, or at least 0.5 mole percent, or at least 1 mole percent, based on the total moles of R and R'.

A method of making the flexible substrate comprises: disposing a solution comprising the poly(etherimide) and a solvent on a carrier substrate to form a film; and heating the film under conditions effective to remove the solvent to provide the poly(etherimide) film.

A method of making the flexible substrate comprises: extruding a molten composition comprising the poly(etherimide) to form the poly(etherimide) film.

A flexible electronic assembly comprises the flexible substrate of the present disclosure; and one or more electronic components disposed on at least a portion of the flexible substrate.

The above described and other features are exemplified by the following figures and detailed description.

### BRIEF DESCRIPTION OF THE DRAWINGS

The following figures represent exemplary embodiments.
FIG. 1 shows a schematic illustration of the preparation of a thin film transistor.
FIG. 2 shows optical images taken at 5x magnification of two poly(etherimide) films after exposure to acetone.
FIG. 3 shows ultra-violet/visible light transmittance of various films according to the examples.

### DETAILED DESCRIPTION

The present inventors have unexpectedly found that a flexible substrate for use in an electronic assembly can be prepared from a particular poly(etherimide) composition. The flexible substrate of the present disclosure can advantageously exhibit a desirable combination of flexibility, mechanical, environmental and thermal stability, low thermal stress, film uniformity, and transparency, making it well suited for use in flexible electronics.

Accordingly, an aspect of the present disclosure is a flexible substrate for an electronic assembly. The flexible substrate comprises a film comprising a poly(etherimide), wherein the poly(etherimide) comprises repeating units of formula (I) and formula (II) 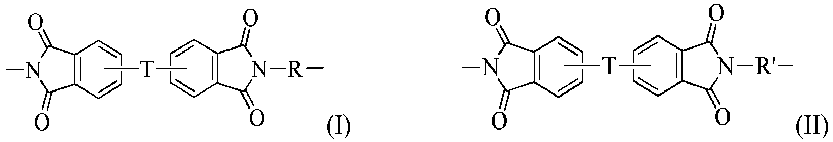 wherein T is -O- or a group of the formula -O-Z-O- wherein the divalent bonds of the -O- or the -O-Z-O- group are in the 3,3', 3,4', 4,3', or the 4,4' positions, and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, provided that the valence of Z is not exceeded. Exemplary groups Z include groups of formula (III) 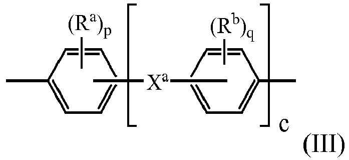 wherein R^{a} and R^{b} are each independently the same or different, and are a halogen atom or a monovalent C₁₋₆ alkyl group, for example; p and q are each independently integers of 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (IIIa) 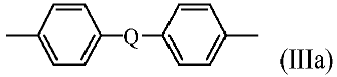 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In a specific embodiment Z is a derived from bisphenol A, such that Q in formula (3a) is 2,2-isopropylidene.

Further in formula (I), each R is independently the same or different, and is a substituted or unsubstituted divalent organic group of one or more of the following formulas (IV) 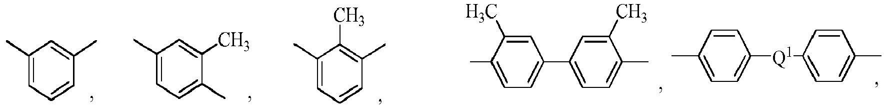 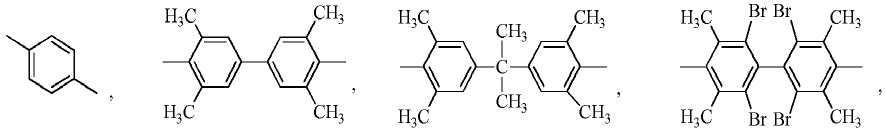 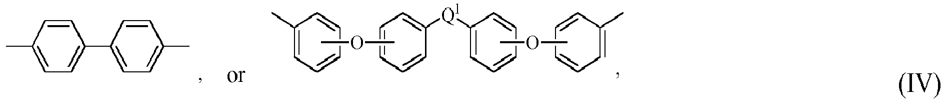 wherein Q¹ is -O-, -S-, -C(O)-, -SO₂-, -SO-, -P(R^{a})(=O)- wherein R^{a} is a C₁₋₈ alkyl or C₆₋₁₂ aryl,-C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some embodiments R is m-phenylene, p-phenylene, or a diarylene sulfone, in particular bis(4,4'-phenylene)sulfone, bis(3,4'-phenylene)sulfone, bis(3,3'-phenylene)sulfone, or a combination comprising at least one of the foregoing. In some embodiments, at least 10 mole percent or at least 50 mole percent of the R groups contain sulfone groups, and in other embodiments no R groups contain sulfone groups.

In an embodiment in formula (I), R is m-phenylene, p-phenylene, or a combination thereof, and T is -O-Z-O- wherein Z is a divalent group of formula (IIIa). Alternatively, R is m-phenylene, p-phenylene, or a combination thereof, and T is -O-Z-O-wherein Z is a divalent group of formula (IIIa) and Q is 2,2-isopropylidene.

In formula (II), R' is a divalent group comprising a photoactive ketone group. As used herein, the term "photoactive ketone group" refers to a ketone-containing moiety that, when exposed to ultraviolet light of the appropriate wavelength, is capable of reacting to form a crosslink with another molecule. The term "ketone group" refers to a carbonyl group(-CO-) that is bonded to two other carbon atoms (e.g., -R¹-CO-R²-). The two other carbon atoms can be in an aliphatic group or an aromatic group. Exemplary R' groups can be derived from, for example, benzophenone, acetophenone, naphthyl phenyl ketone, 1-(Z)phenyl-2-phenylethane-1,2-dione, 1-((Z)phenyl)-2-hydrocarboxy-2-phenylethanone, 2-((Z)phenyl)-2-hydrocarboxy-1-phenylethanone, 4-((Z)phenyl)-benzophenone, 4-(Z)-4'-phenylbenzophenone, 4-[((Z))phenoxy]-benzophenone, 4-(Z)-4'-phenoxy-benzophenone, dibenzosuberone, 9H-thioxanthen-9-one, and the like, or a combination thereof. The foregoing photoactive ketone groups can optionally be substituted or unsubstituted, preferably wherein any substituents present are present at one or more positions on the aromatic ring. In an aspect, the photoactive ketone group is derived from a benzophenone group.

In an aspect, T is -O-Z-O- and Z is derived from bisphenol A, R is a divalent group derived from meta-phenylene diamine, R' is a divalent group derived from 4,4'-diaminebenzophenone. In another specific aspect, T is -O-Z-O- and Z is derived from bisphenol A, R is a divalent group derived from meta-phenylene diamine, R' is a divalent group derived from 4,4'-diaminebenzophenone and R' is present in an amount of 2 to 5 mole percent, based on the total moles or R and R'.

R' can be present in an amount of greater than or equal to 0.1 mole percent, or greater than or equal to 0.25 mole percent, or greater than or equal to 0.5 mole percent, or greater than or equal to 1 mole percent, each based on the total moles of R and R'. In an aspect, R' can be present in an amount of less than or equal to 50 mole percent, or less than or equal to 40 mole percent, or less than or equal to 30 mole percent, or less than or equal to 20 mole percent, or less than or equal to 10 mole percent. Within these ranges, R' can be present in an amount of 0.1 to 50 mole percent, or 0.25 to 50 mole percent, or 0.5 to 50 mole percent, or 1 to 50 mole percent, or 1 to 40 mole percent, or 1 to 30 mole percent, or 1 to 20 mole percent, or 1 to 10 mole percent, or 1 to 7 mole percent, or 1 to 5 mole percent, or 2 to 5 mole percent, or 3 to 4 mole percent.

The poly(etherimide) can be prepared by any of the methods known to those skilled in the art, including the reaction of an aromatic bis(ether anhydride) (V) or a chemical equivalent thereof, with an organic diamine of formula (VIa) and (VIb) 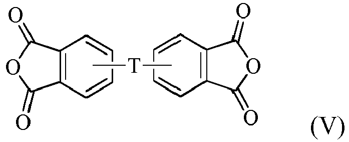 H₂N-R-NH₂ (VIa) H₂N-R'-NH₂ (VIb) wherein T, R and R' are defined as described above.

Illustrative examples of aromatic bis(ether anhydride)s include 2,2-bis[4-(3,4-dicarboxyphenoxy)phenyl]propane dianhydride (also known as bisphenol A dianhydride or BPADA), 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; 4,4'-(hexafluoroisopropylidene)diphthalic anhydride; and 4-(2,3-dicarboxyphenoxy)-4'-(3,4-dicarboxyphenoxy)diphenyl sulfone dianhydride. A combination of different aromatic bis(ether anhydride)s can be used.

Examples of organic diamines of formula (VIa) can include 1,4-butane diamine, 1,5-pentanediamine, 1,6-hexanediamine, 1,7-heptanediamine, 1,8-octanediamine, 1,9-nonanediamine, 1,10-decanediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylene-diamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl)toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. C₁₋₄ alkylated or poly(C₁₋₄)alkylated derivatives of any of the foregoing can be used, for example a polymethylated 1,6-hexanediamine. Combinations of these compounds can also be used. In an aspect the organic diamine is m-phenylenediamine, p-phenylenediamine, 4,4'-diaminodiphenyl sulfone, 3,4'-diaminodiphenyl sulfone, 3,3'-diaminodiphenyl sulfone, or a combination thereof.

Examples of organic diamines of formula (VIb) are those in which R' is derived from a photoactive ketone group as discussed above. For example, an organic diamine according to formula (VIb) can be 4,4'-diaminobenzophenone.

The film comprising the poly(etherimide) can optionally further comprise one or more additives selected to achieve a desired property, with the proviso that the additive(s) are also selected so as to not significantly adversely affect a desired property of the flexible substrate. Exemplary additives can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, flame retardant, anti-drip agent (e.g., a PTFE-encapsulated styrene-acrylonitrile copolymer (TSAN)), or a combination thereof. In general, the additives are used in the amounts generally known to be effective. For example, the total amount of an additive (other than any impact modifier, filler, or reinforcing agent) can be 0.001 to 10.0 wt%, or 0.01 to 5 wt%, each based on the total weight of the poly(etherimide). In another aspect, the film can contain additives such as additional polymers (e.g., amorphous polymers), polyethylene, high density polyethylene (HDPE), polyethylene terephthalates (PETs), fatty acids, siloxanes, wax, and the like, or combinations thereof. In such an aspect, the additives can be selected so as to not provide more than 10 wt. % of fluorine, not provide more than 5,000 ppm of a silicone by weight of the composition, or otherwise do not significantly adversely affect the desired properties of the polymer compositions. In an aspect, the additives can be present in a polymer composition for films in an amount that provides less than 1,000 ppm of a compound having a molecular weight of less than about 250 Da. In an aspect, no additives are present in the film.

The film can have a thickness of, for example, 1 to 100 micrometers, or 1 to 50 micrometers. The flexible substrate can have a transmittance of at least 80%, or at least 85%, or at least 90%, or at least 95% from 400 to 800 nanometers. In an aspect, the film can have a thickness of 1 to 10 micrometers and a transmittance of greater than 95% from 400 to 800 nanometers.

In an aspect, the film can be disposed on a substrate, preferably a glass or metal substrate. When present, the substrate can generally have any thickness, but can preferably have a thickness that allows the flexible substrate to retain flexibility. For example, the substrate, when present, can have a thickness of less than 2 millimeters. In an aspect, the substrate can be a glass substrate having a thickness of less than 1.5 millimeters. In an aspect, the substrate can be a metal substrate having a thickness of less than 1 millimeter. In an aspect, no supporting substrate is present. Stated another way, the flexible substrate can comprise a free-standing poly(etherimide film). The flexible substrate can consist of the poly(etherimide) film.

The flexible substrate can be made, for example, by disposing a solution comprising the poly(etherimide) and a solvent onto a supporting substrate, and heating the supporting substrate under conditions effective to remove the solvent and provide the poly(etherimide) film. Suitable solvents can include any solvent that is effective to dissolve the poly(etherimide). Exemplary solvents include polar organic solvents, such as dimethylformamide, N-methylpyrrolidone, N-ethylpyrrolidone, dimethylsulfoxide, chlorobenzene, anisole, dichloromethane, chloroform, tetrahydrofuran, sulfolane, and the like, or a combination thereof. The poly(etherimide) can be present in the solution in an amount of 1 to 50 weight percent, or 5 to 40 weight percent, or 5 to 30 weight percent, or 5 to 25 weight percent, or 10 to 10 weight percent, each based on the total weight of the solution. Disposing the solution on the supporting substrate can include any known solution coating technique, for example, spin coating, spray coating, doctor blading, slot die coating, and the like, or a combination thereof. In an aspect, disposing the solution on the substrate can be by spin coating, for example at a spin speed of 500 to 2500 rpm.

Conditions effective to remove the solvent can be selected based on the identity of the solvent, and can include, for example, thermal treatment at a temperature of 40 to 450°C for 5 minutes to 3 hours, optionally at reduced pressure.

The method can optionally further comprise removing the poly(etherimide) film from the supporting substrate. Removing the film can be by, for example, peeling the film from the substrate under conditions effective to delaminate the film from the substrate.

The method can optionally further comprise exposing the poly(etherimide) film to ultraviolet light at a wavelength effective to provide the corresponding crosslinked poly(etherimide) film. This optional crosslinking step can be conducted before or after removing the film from the supporting substrate, as described above. The film can be exposed to a substantially uniform dose of UV light. The exposure can be accomplished using standard methods known in the art. For example, the UV light can come from any source of UV light, such as, but not limited to, those lamps powered by microwave, high intensity discharge (HID) lamps, and mercury vapor lamps. In an aspect, the film can be exposed to natural sunlight. The exposure time can range from a few minutes to several days. Alternatively, the crosslinking can be accomplished by using a UV-emitting light source such as a mercury vapor lamp, a HID lamp, or various other UV lamps. For example, commercial UV lamps are sold for UV curing from manufacturers such as Hereaus Noblelight Fusion UV. Non-limiting examples of UVemitting light bulbs include mercury bulbs (H bulbs), or metal halide doped mercury bulbs (D bulbs, H+ bulbs, and V bulbs). Other combinations of metal halides to create a UV light source are also contemplated. Exemplary bulbs could also be produced by assembling the lamp out of UV-absorbing materials and considered as a filtered UV source. An undoped mercury arc lamp is not used for irradiation. An H bulb has strong output in the range of 200 nanometers (nm) to 320 nm. The D bulb has strong output in the 320 nm to 400 nm range. The V bulb has strong output in the 400 nm to 420 nm range.

It can be beneficial to control the temperature. Often increased temperature can increase the crosslinking, but if the temperature is excessive, the film can become unacceptably discolored, warped, or distorted.

It can also be advantageous to use a UV light source where the harmful wavelengths (those that cause polymer degradation or excessive yellowing) are removed or not present. Equipment suppliers such as Heraeus Noblelight and Fusion UV provide lamps with various spectral distributions. The light can also be filtered to remove harmful or unwanted wavelengths of light. This can be done with optical filters that are used to selectively transmit or reject a wavelength or range of wavelengths. These filters are commercially available from a variety of companies such as Edmund Optics or Praezisions Glas & Optik GmbH. Bandpass filters are designed to transmit a portion of the spectrum, while rejecting all other wavelengths. Longpass edge filters are designed to transmit wavelengths greater than the cut-on wavelength of the filter. Shortpass edge filters are used to transmit wavelengths shorter than the cut-off wavelength of the filter. Various types of materials, such as borosilicate glass, can be used as a long pass filter. Schott or Praezisions Glas & Optik GmbH for example have the following long pass filters: WG225, WG280, WG295, WG305, WG320 which have cut-on wavelengths of ∼ 225, 280, 295, 305, and 320 nm, respectively. These filters can be used to screen out the harmful short wavelengths while transmitting the appropriate wavelengths for the crosslinking reaction.

UV wavelengths can be separated into four different categories. UVA refers to wavelengths from 320 nm to 390 nm. UVB refers to wavelengths from 280 nm to 320 nm. UVC refers to wavelengths from 250 nm to 260 nm. UVV refers to wavelengths from 395 nm to 445 nm. In some embodiments, the UV radiation is filtered to provide an effective dosage of at least 2 J/cm of UVA radiation and no detectable UVC radiation, as measured using an EIT PowerPuck. In other more specific embodiments, the UV radiation is filtered to provide an effective dosage of at least 3 J/cm of UVA radiation and no detectable UVC radiation, or at least 12 J/cm of UVA radiation and no detectable UVC radiation, or at least 36 J/cm of UVA radiation and no detectable UVC radiation, as measured using an EIT PowerPuck.

In an aspect, the film can be exposed to a selected UV light range having wavelengths from 280 nanometers (nm) to 380 nm, or from 330 nm to 380 nm, or from 280 nm to 360 nm, or from 330 nm to 360 nm. The wavelengths in a "selected" light range have an internal transmittance of greater than 50%, with wavelengths outside of the range having an internal transmittance of less than 50%. The change in transmittance can occur over a range of 20 nm. Reference to a selected light range should not be construed as saying that all wavelengths within the range transmit at 100%, or that all wavelengths outside the range transmit at 0%.

Alternatively, the flexible substrate of the present disclosure can be made by a method comprising extruding a molten composition comprising the poly(etherimide) to form the poly(etherimide) film. Extrusion can be at a temperature of 250 to 500°C. The extruded flexible substrate can optionally be crosslinked by exposing the film to light at the desired wavelength, as described above.

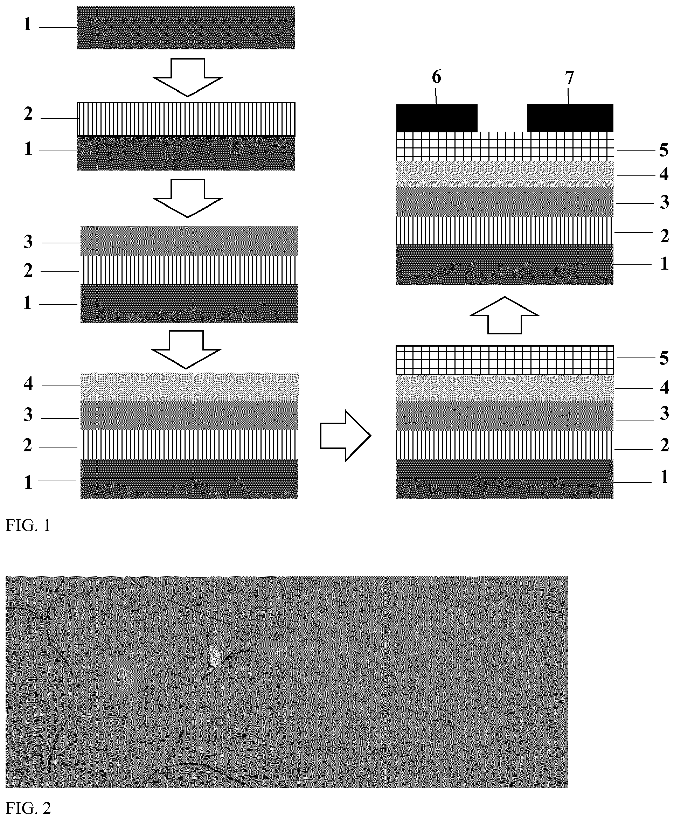

A flexible electronic assembly represents another aspect of the present disclosure. A flexible electronic assembly includes the flexible substrate of the present disclosure and one or more electronic components disposed on at least a portion of the flexible substrate. In an aspect, the flexible electronic assembly can be a thin film transistor (TFT). Thin film transistors can include bottom gate TFTs, top gate TFTs, and dual gate TFTs. In an aspect, the thin film transistor can be a bottom gate TFT and can comprise the flexible substrate of the present disclosure, a barrier layer disposed on the flexible substrate, an electrode layer disposed on the barrier layer on a side opposite the flexible substrate, a dielectric layer disposed on the electrode layer on a side opposite the barrier layer, and a semiconducting layer disposed on the dielectric layer on a side opposite the electrode layer. A TFT, and a process for its manufacture are illustrated schematically in FIG. 1. As shown in FIG. 1, the flexible substrate (1) is first coated with a barrier layer (2), followed by a gate layer (3), a dielectric layer (4), a semiconductor layer (5), and a source (6) and a drain (7). An example of a preparation of a thin film transistor is further described in the working examples below.

Exemplary barrier layer materials can include, for example, aluminum oxide, hafnium oxide, titanium oxide, zirconium oxide, and the like, or a combination thereof. Exemplary electrode layers can include, for example, a conducting metal oxide (e.g., aluminum-doped zinc oxide, gallium doped zinc oxide, indium tin oxide, tin oxide, fluorine doped tin oxide, and the like, or a combination thereof), a metal (e.g., titanium, chromium, aluminum, zinc, molybdenum, copper, and the like, or a combination thereof), or a combination thereof. Exemplary dielectric layers can include, for example, hafnium oxide, titanium oxide, zirconium oxide, and the like, or a combination thereof. Exemplary semiconducting layers can include, for example, silicon, a metal oxide, (e.g., zinc oxide, tin oxide, indium oxide, zinc-tin oxide, zinc-indium oxide, indium-gallium-zinc oxide, and the like, or a combination thereof), an organic semiconductor (e.g., pentacene, poly(3,4-ethylenedioxythiophene) polystyrene sulfonate, poly(3-hexyl thiophene), and the like, or a combination thereof), or a combination thereof.

The flexible substrate and flexible electronic assemblies described herein can be particularly useful in a variety of articles, particularly, in flexible electronic devices. Exemplary electronic devices can include a flexible flat panel display, a lighting device, a photovoltaic device, a sensor, a battery, a radio frequency identification device, a data storage device, or the like.

This disclosure is further illustrated by the following examples, which are non-limiting.

### EXAMPLES

Materials used for the following examples are shown in Table 1.

**Table 1**

| Component | Description | Supplier |
|---|---|---|
| XPEI | Poly(etherimide) derived from polymerization of 4,4'-bisphenol A dianhydride, m-phenylene diamine, 4,4'-diaminobenzophenone, and phthalic anhydride, prepared according to Preparative Example 1. | |
| PEI-1 | Poly(etherimide) derived from polymerization of 4,4'-bisphenol A dianhydride and m-phenylene diamine, available as ULTEM 1010 | SABIC |
| PEI-2 | Poly(etherimide) derived from polymerization of 3,3'-bisphenol A, 3-chlorophthalic anhydride, and 4,4'-diaminodiphenyl sulfone, available as EXTEM XH1015 | SABIC |
| PI | Polyamic acid derived from biphenyl dianhydride and 1,4-phenylene diamine as a solution in N-methyl pyrrolidone, available as PI-2611 | Dupont |

Molecular weights of XPEI (non-crosslinked) and PEI-1 were characterized by gel permeation chromatography (GPC) relative to polystyrene standards. Results for the number average molecular weight (Mn), weight average molecular weight (Mw), and dispersity (Ð, defined as Mw/Mn) are shown in Table 2.

**Table 2**

| Material | Mn (g/mole) | Mw (g/mole) | Ð |
|---|---|---|---|
| XPEI | 21,840 | 49,040 | 2.23 |
| PEI-1 | 19,600 | 48,180 | 2.5 |

Phase transition behaviors of PEI-1 and XPEI were assessed using differential scanning calorimetry (DSC) at a heating rate of 10°C per minute. Both materials were found to have similar glass transition temperatures (Tg). PEI-1 exhibited a Tg of 215.3°C and XPEI exhibited a Tg of 217.3°C.

### Preparative Example 1: Synthesis of XPEI

A 500 mL 3-neck round-bottom flask equipped with a Dean-Stark trap, condenser, mechanical stirrer, and nitrogen inlet was charged with bisphenol A dianhydride (40.726 g, 0.0782 mol), phthalic anhydride (0.6879 g, 4.644 mmol), meta-phenylene diamine (8.2395, 0.0762 mol) and ortho-dichlorobenzene (o-DCB) (61 g). The flask was placed in an oil bath at 25°C, inerted with nitrogen (15 scfh), agitated at 200 rpm, and heated to 190°C. After 30 minutes of reaction, complete dissolution of contents was noted and 4,4'-diaminobenzophenone (0.5865 g, 0.00276 mol) was added to the flask. The reaction was continued for an additional 120 minutes. The flask was removed from the hot bath and allowed to cool to room temperature. The entire polymer solution was split into 5 gram portions and each portion was devolatilized in a glass test tube at 380°C in nitrogen atmosphere for 15 minutes. The resulting polymer block was pressed into a film using a Carver hydraulic laboratory press at 360°C for 2 minutes. The hot pressing provided a transparent yellow film. GPC results were as follows (GPC results are based on polystyrene standards): Mw: 49,040 grams per mole; Mn: 21,840 grams per mole; Dispersity: 2.23; Mz/Mw: 1.61.

### Substrate and Film Preparation

4" diameter circular Si and SiO₂-coated Si substrates, and 1x1 inch Si and glass square substrates were used as a carrier for testing. The substrates were cleaned using acetone, isopropanol (IPA), and deionized water, for 5 minutes in each solvent, then were dried with high purity nitrogen.

XPEI, PEI-1, and PEI-2 were coated onto the above substrate materials by dissolving in dimethylformamide (DMF) or N-methylpyrrolidone (NMP) for 1-4 hours to provide 10-20 weight percent solutions. The solutions were stirred until dissolved at a temperature of 50-60°C. Spin coating or doctor blading processes were then used to form films on the substrates. Spin coating was at a speed of 700 pm for a 10 weight percent solution or 2000 rpm for a 20 weight percent solution, providing a layer of 5 to 7 micrometers thick. Doctor blading provided films having a thickness of 50 micrometers. The films were cured in a conventional oven for 2 hours at 60°C under vacuum for films coated from DMF, and stepwise at temperatures of 50, 100 and 200°C for films coated from NMP. For comparison, a PI solution was spin coated and cured to form a film having a thickness of 7 or 30 micrometers. For the PI solution, after spin coating, the as-spun precursor was thermally cured to the corresponding fully aromatic polyimide film. Spin coating of the PI solution was done in two steps: 500 rpm for 10 seconds, followed by 2000 rpm for 35 seconds. Then, the film was thermally treated at 80 to 150°C for 1.5 minutes, then slowly ramped to 300°C at a rate of 4°C/min and holing for 30 minutes. The film was then slowly cooled to room temperature.

### Surface Roughness

Surface roughness of the coated films was evaluated. XPEI when deposited from NMP solution showed similar surface roughness to PEI (e.g., a root mean square roughness of 1-2 nanometers, where root mean square roughness is defined as the root mean square average of the profile height deviations from the mean line), as determined using a 3D Optical Surface Profiler from ZYGO. It was also noted that at the same thickness (7 micrometers), the film from XPEI was more transparent compared to a film from PEI-1.

### Optical Transmittance

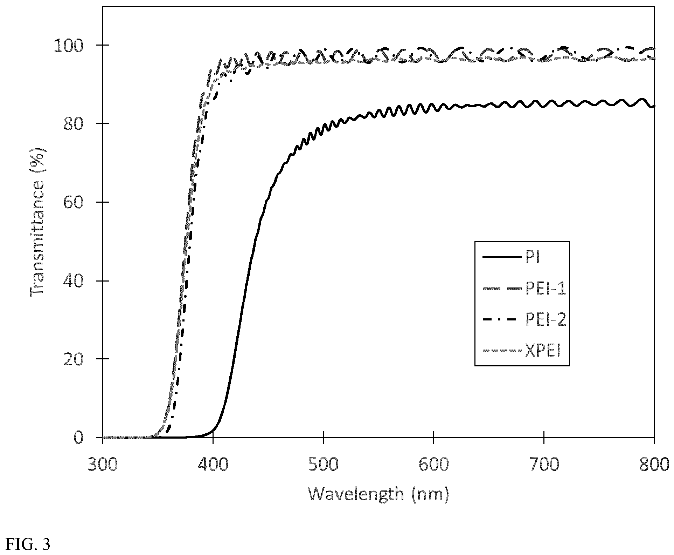

High optical transmittance is needed for a wide range of applications including electronic and optoelectronic applications (e.g., LED applications). UV-Vis transmittance of PEI-1, PEI-2, XPEI, and PI films were measured as shown in FIG. 3. The films had thicknesses of 5 to 10 micrometers. Both PEI-1 and XPEI exhibited transmittance of greater than 95% and short-wavelength cutoffs at 400 nanometers, compared 80% and 500 nm cutoff for PI.

### Thin Film Transistor Fabrication

As an example, a thin film transistor was prepared according to the schematic illustration shown in FIG. 1.

A barrier layer was deposited on the coated substrates. In particular, aluminum oxide (Al₂O₃) thin film of thickness 30 nm was deposited on top of the polymeric film by Atomic Layer Deposition (ALD) using trimethylaluminum (TMA) as source of aluminum and deionized water (DIW) as the source of oxygen. The growth temperature for Al₂O₃ deposition was fixed at 160°C. The pulse time for both TMA and DIW precursor was fixed at 0.015 seconds and 20 sfcm of N₂ gas was used as the process gas.

Next, a gate electrode was deposited. Aluminum doped zinc oxide (AZO) thin film of thickness 170 nm was used as the gate electrode. The AZO films were deposited by ALD at 160°C using diethylzinc (DEZ) and trimethylaluminum (TMA) obtained from Sigma Aldrich as the sources of Zn and Al, respectively, and DIW as the source of oxygen. The ratio of DEZ sub-cycle (DIW/N₂-purge/DEZ/ N2-purge) to TMA sub-cycle (DIW/ N₂-purge /TMA/ N₂-purge) was fixed at 20:1 to obtain AZO film with low sheet resistance (110 Q/square). The supper cycle [(DIW/N₂-purge/DEZ/ N₂-purge) + (DIW/ N₂-purge /TMA/ N₂-purge)] was repeated 45 times to get AZO films with thickness of 170 nm. The pulse time of DEZ, TMA and DIW precursor was fixed at 0.015 seconds and 20 standard cubic centimeter per minute (sccm) of N₂ gas was used as the process gas. Gate electrode patterning was not performed.

Hafnium oxide (HfO₂) was used as the gate dielectric layer. The HfO₂ gate dielectric layer was deposited on top of the AZO gate electrodes by ALD technique using tetrakis(dimethylamido)hafnium(IV) from Sigma Aldrich as the Hf precursor and ozone as the oxygen precursor and 90 sccm of N₂ gas was used as the process gas. Hafnium oxide dielectric layer can also be deposited using water or hydrogen peroxide as the oxygen precursor. The pulse time of tetrakis(dimethylamido)hafnium(IV) and ozone was fixed at 0.2 seconds and 0.15 seconds, respectively. The growth temperature for the HfO₂ film was 160°C.

### Stability to Photolithography

During photolithographic processing, substrates are typically exposed to various solvents including, for example, acetone, isopropanol, and water. Substrates can also be exposed to photoresists and developer solutions. The stability of the various poly(etherimide) substrates was tested. It was found that when PEI-1 was used, cracks formed upon exposure to acetone, but was generally stable with exposure to isopropanol and the photoresist developer (AZ-726 available from Microchemicals). In contrast, when XPEI was used, higher resistance to acetone was observed and no cracking occurred. A comparison of the PEI-1 film with the XPEI film after exposure to acetone is shown in FIG. 2 (PEI-1 is shown on the left, and XPEI is shown on the right). FIG. 2 shows images obtained by optical microscopy at 5x magnification. It was also observed that films formed from PEI-2 exhibited cracking after exposure to acetone.

### Stability to Atomic Layer Deposition

It was also determined that PEI-1 films cracked when exposed to ALD conditions, operated at a maximum temperature of 160°C on 1 inch Si substrates. Without wishing to be bound by theory, it is believed that the cracking observed for the PEI-1 film is induced by the cyclic ALD reactions at the surface of the substrate rather than thermal instability, since the Tg of the PEI-1 is higher than the operating temperature for ALD. In contrast, when XPEI was tested, no crack were formed. XPEI also showed excellent resistance to Al₂O₃, AZO, and HfO₂ deposition.

To investigate the effect of the ALD processes on larger substrates, films of PEI-1, PEI-2, and XPEI were prepared and deposited on 4 inch Si wafers. After curing, layers of

Al₂O₃, AZO, and HfO₂ were deposited, followed by treatment with acetone. Light cracks were observed for the PEI-1 and PEI-2 films with either gate or dielectric depositions. Delamination and extensive cracking were observed for both PEI-1 and PEI-2 following exposure to acetone. For the case of XPEI, no cracks were formed regardless of the deposited materials and also showed excellent resistance to acetone treatment.

Accordingly, XPEI has been shown to withstand various processing conditions for microelectronics.

This disclosure further encompasses the following aspects.
Aspect 1: A flexible substrate for an electronic assembly, the flexible substrate comprising: a film comprising a poly(etherimide) comprising repeating units of formula (I) and formula (II) 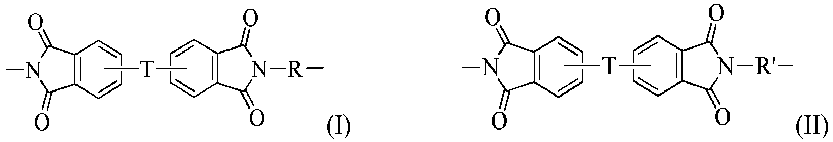 wherein T is -O- or a group of the formula -O-Z-O- and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing, R is a divalent group of the formula 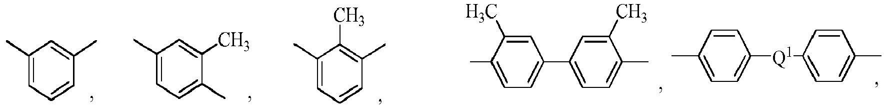 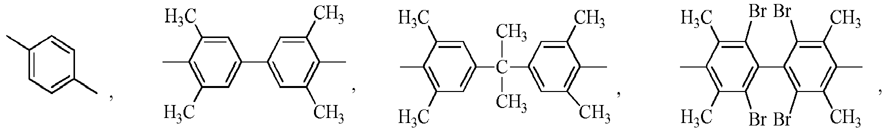 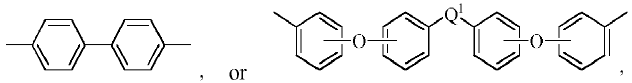 wherein Q¹ is -O-, -S-, -SO₂-, -SO-, -P(R^{a})(=O)- wherein R^{a} is a C₁₋₈ alkyl or C₆₋₁₂ aryl, -C_{y}H_{2y}- wherein y is an integer from 1 to 5 or a halogenated derivative thereof, or -(C₆H₁₀)_{z}- wherein z is an integer from 1 to 4; R' is a divalent group comprising a photoactive ketone group, and R' is present in an amount of at least 0.1 mole percent, or at least 0.25 mole percent, or at least 0.5 mole percent, or at least 1 mole percent, based on the total moles of R and R'.
Aspect 2: The flexible substrate of aspect 1, wherein R' is 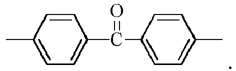
Aspect 3: The flexible substrate of aspect 1 or 2, wherein R' is present in an amount of 1 to 10 mole percent, or 1 to 7 mole percent, or 1 to 5 mole percent, or 2 to 5 mole percent, or 3 to 4 mole percent, based on the total moles of R and R'.
Aspect 4: The flexible substrate of any of aspects 1 to 3, wherein the film is disposed on a glass substrate or a metal substrate, preferably wherein the glass substrate or the metal substrate has a thickness of less than 2 millimeters.
Aspect 5: The flexible substrate of any of aspects 1 to 4, wherein the film has a thickness of 1 to 100 micrometers, preferably 1 to 50 micrometers.
Aspect 6: The flexible substrate of any of aspects 1 to 5, wherein the flexible substrate has a transmittance of at least 80%, or at least 85%, or at least 90%, or at least 95% from 400 to 800 nanometers.
Aspect 7: The flexible substrate of aspect 1, wherein T is -O-Z-O- and Z is derived from bisphenol A, R is a divalent group derived from meta-phenylene diamine, R' is a divalent group derived from 4,4'-diaminebenzophenone, and R' is present in an amount of 2 to 5 mole percent, based on the total moles or R and R'.
Aspect 8: A method of making the flexible substrate of any of aspects 1 to 7, the method comprising: disposing a solution comprising the poly(etherimide) and a solvent on a carrier substrate to form a film; and heating the film under conditions effective to remove the solvent to provide the poly(etherimide) film.
Aspect 9: The method of aspect 8, wherein disposing the solution on the carrier substrate comprises spin coating, doctor blading, spray coating, slot die coating, or a combination thereof.
Aspect 10: The method of aspect 8 or 9, wherein the method further comprises removing the poly(etherimide) film from the carrier substrate.
Aspect 11: A method of making the flexible substrate of any of aspects 1 to 7, the method comprising: extruding a molten composition comprising the poly(etherimide) to form the poly(etherimide) film.
Aspect 12: A flexible electronic assembly comprising the flexible substrate of any of aspects 1 to 7; and one or more electronic components disposed on at least a portion of the flexible substrate.
Aspect 13: The flexible electronic assembly of aspect 12, wherein the flexible electronic assembly is a thin film transistor comprising: the flexible substrate of any of aspects 1 to 7; a barrier layer disposed on the flexible substrate; an electrode layer disposed on the barrier layer on a side opposite the flexible substrate; a dielectric layer disposed on the electrode layer on a side opposite the barrier layer; and a semiconducting layer disposed on the dielectric layer on a side opposite the electrode layer.
Aspect 14: The flexible electronic assembly of aspect 13, wherein the barrier layer comprises aluminum oxide, hafnium oxide, titanium oxide, zirconium oxide, or a combination thereof; the electrode layer comprises a conducting metal oxide, preferably aluminum-doped zinc oxide, gallium doped zinc oxide, indium tin oxide, tin oxide, or fluorine doped tin oxide, or a metal, preferably titanium, chromium, aluminum, zinc, molybdenum, copper or a combination thereof; the dielectric layer comprises hafnium oxide, titanium oxide, zirconium oxide, or a combination thereof; and the semiconducting layer comprises silicon, a metal oxide, preferably zinc oxide, tin oxide, indium oxide, zinc-tin oxide, zinc-indium oxide, or indium-gallium-zinc oxide, an organic semiconductor, preferably pentacene, poly(3,4-ethylenedioxythiophene) polystyrene sulfonate, poly(3-hexyl thiophene), or a combination thereof.
Aspect 15: An article comprising the flexible electronic assembly of any of aspects 12 to 14, preferably wherein the article is a flexible electronic device, more preferably a flexible flat panel display, a lighting device, a photovoltaic device, a sensor, a battery, a radio frequency identification device, or a data storage device.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. The term "combination thereof' as used herein includes one or more of the listed elements, and is open, allowing the presence of one or more like elements not named. In addition, it is to be understood that the described elements may be combined in any suitable manner in the various embodiments.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl), a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A flexible substrate for an electronic assembly, the flexible substrate comprising:
a film comprising a poly(etherimide) comprising repeating units of formula (I) and formula (II) 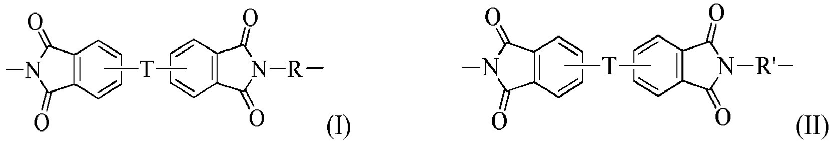 wherein
T is -O- or a group of the formula -O-Z-O- and Z is an aromatic C₆₋₂₄ monocyclic or polycyclic moiety optionally substituted with 1 to 6 C₁₋₈ alkyl groups, 1 to 8 halogen atoms, or a combination comprising at least one of the foregoing,
R is a divalent group of the formula 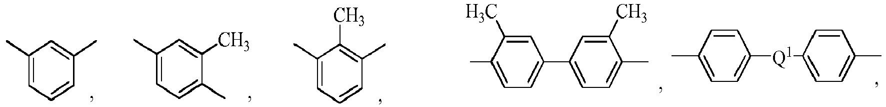 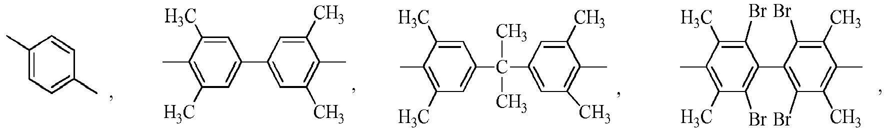 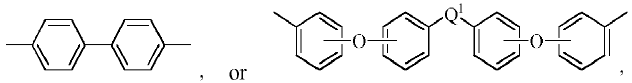
wherein Q¹ is -O-, -S-, -SO₂-, -SO-, -P(R^{a})(=O)- wherein R^{a} is a C₁₋₈ alkyl or C₆₋₁₂ aryl, -C_{y}H_{2y}- wherein y is an integer from 1 to 5 or a halogenated derivative thereof, or -(C₆H₁₀)_{z}- wherein z is an integer from 1 to 4;
R' is a divalent group comprising a photoactive ketone group, and
R' is present in an amount of at least 0.1 mole percent, or at least 0.25 mole percent, or at least 0.5 mole percent, or at least 1 mole percent, based on the total moles of R and R'.

2. The flexible substrate of claim 1, wherein R' is

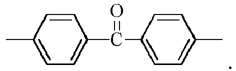

3. The flexible substrate of claims 1 or 2, wherein R' is present in an amount of 1 to 10 mole percent, or 1 to 7 mole percent, or 1 to 5 mole percent, or 2 to 5 mole percent, or 3 to 4 mole percent, based on the total moles of R and R'.

4. The flexible substrate of any of claims 1 to 3, wherein the film is disposed on a glass substrate or a metal substrate, preferably wherein the glass substrate or the metal substrate has a thickness of less than 2 millimeters.

5. The flexible substrate of any of claims 1 to 4, wherein the film has a thickness of 1 to 100 micrometers, preferably 1 to 50 micrometers.

6. The flexible substrate of any of claims 1 to 5, wherein the flexible substrate has a transmittance of at least 80%, or at least 85%, or at least 90%, or at least 95% from 400 to 800 nanometers.

7. The flexible substrate of claim 1, wherein T is -O-Z-O- and Z is derived from bisphenol A, R is a divalent group derived from meta-phenylene diamine, R' is a divalent group derived from 4,4'-diaminebenzophenone, and R' is present in an amount of 2 to 5 mole percent, based on the total moles or R and R'.

8. A method of making the flexible substrate of any of claims 1 to 7, the method comprising:
disposing a solution comprising the poly(etherimide) and a solvent on a carrier substrate to form a film; and
heating the film under conditions effective to remove the solvent to provide the poly(etherimide) film.

9. The method of claim 8, wherein disposing the solution on the carrier substrate comprises spin coating, doctor blading, spray coating, slot die coating, or a combination thereof.

10. The method of claim 8 or 9, wherein the method further comprises removing the poly(etherimide) film from the carrier substrate.

11. A method of making the flexible substrate of any of claims 1 to 7, the method comprising:
extruding a molten composition comprising the poly(etherimide) to form the poly(etherimide) film.

12. A flexible electronic assembly comprising
the flexible substrate of any of claims 1 to 7; and
one or more electronic components disposed on at least a portion of the flexible substrate.

13. The flexible electronic assembly of claim 12, wherein the flexible electronic assembly is a thin film transistor comprising:
the flexible substrate of any of claims 1 to 7;
a barrier layer disposed on the flexible substrate;
an electrode layer disposed on the barrier layer on a side opposite the flexible substrate;
a dielectric layer disposed on the electrode layer on a side opposite the barrier layer; and
a semiconducting layer disposed on the dielectric layer on a side opposite the electrode layer.

14. The flexible electronic assembly of claim 13, wherein
the barrier layer comprises aluminum oxide, hafnium oxide, titanium oxide, zirconium oxide, or a combination thereof;
the electrode layer comprises a conducting metal oxide, preferably aluminum-doped zinc oxide, gallium doped zinc oxide, indium tin oxide, tin oxide, or fluorine doped tin oxide, or a metal, preferably titanium, chromium, aluminum, zinc, molybdenum, copper or a combination thereof;
the dielectric layer comprises hafnium oxide, titanium oxide, zirconium oxide, or a combination thereof; and
the semiconducting layer comprises silicon, a metal oxide, preferably zinc oxide, tin oxide, indium oxide, zinc-tin oxide, zinc-indium oxide, or indium-gallium-zinc oxide, an organic semiconductor, preferably pentacene, poly(3,4-ethylenedioxythiophene) polystyrene sulfonate, poly(3-hexyl thiophene), or a combination thereof.

15. An article comprising the flexible electronic assembly of any of claims 12 to 14, preferably wherein the article is a flexible electronic device, more preferably a flexible flat panel display, a lighting device, a photovoltaic device, a sensor, a battery, a radio frequency identification device, or a data storage device.
